# EUROPÄISCHE PATENTSCHRIFT

(11) **EP 0 900 623 B1**
(45) Veröffentlichungstag und Bekanntmachung des Hinweises auf die Patenterteilung: **26.02.2003**
(21) Anmeldenummer: 98116765.3
(22) Anmeldetag: 04.09.1998
(51) Int. Cl.: B23K 26/00, F16P 3/00

(54) **Sicherheitsabschirmvorrichtung mit einer Laserschneidanlage**
Safety shielding with a laser cutting machine
Ecran de protection avec machine de décapage par laser

(30) Priorität: 06.09.1997 DE 29716008 U
(43) Veröffentlichungstag der Anmeldung: 10.03.1999
(73) Patentinhaber: ESAB-HANCOCK GmbH, D-61184 Karben (DE)
(72) Erfinder: Sehring, Hans-Joachim, 63755 Alzenau (DE)
(74) Vertreter: Schubert, Siegmar, Dipl.-Ing.

(56) Entgegenhaltungen:
- EP-A- 0 157 221
- DE-C- 19 629 037
- DE-U- 8 908 806
- DE-U- 29 716 008
- US-A- 4 659 902
- US-A- 5 635 086

## Beschreibung

Die Erfindung betrifft eine Sicherheitsabschirmvorrichtung mit einer Laserschneidanlage, die ein auf Schienen in Längsrichtung verfahrbares Maschinenportal mit einem an einem Querträger des Maschinenportals zwischen zwei Seitenwangen in Querrichtung verfahrbaren Führungswagen umfaßt, der einen Laserschneidkopf mit Fokussieroptik aufweist.

Derartige Laserschneidanlagen werden zum Laserstrahlbrennschneiden oder zum Laserstrahlschmelzschneiden eingesetzt.

Bei einer bekannten Sicherheitsabschirmvorrichtung mit einer Laserschneidanlage der eingangs genannten Gattung wird die Laserquelle, ein Resonator, mit dem Maschinenportal mitbewegt, und der von der Laserquelle ausgehende Laserstrahl wird in Querrichtung und über den Führungswagen, der einen Laserschneidkopf mit Fokussieroptik aufweist, auf die zu schneidende Platte aus Stahl oder Aluminium gelenkt (US-A-5 635 086). Der Bereich, in dem der so gelenkte Laserstrahl auf die zu schneidende Platte einwirkt, wird nachfolgend auch als Arbeitsbereich bezeichnet. Die Zuführung des Laserstrahls von der Laserquelle zu dem Laserschneidkopf erfolgt durch eine gekapselte, ausziehbare und unter Druck stehende Laserstrahlführung. Diese erfaßt jedoch nicht den aus dem Laserschneidkopf austretenden Laserstrahl.

Um das Bedienungspersonal der Laserschneidanlage nicht zu gefährden und Sicherheitsvorschriften zu erfüllen, ist es erforderlich, auch diesen aus dem Laserschneidkopf austretenden Laserstrahl abzuschirmen. Dies gilt vor allem dann, wenn es sich nicht um einen sogenannten Geradeschneider handelt, bei dem der Laserschneidkopf vertikal fest an dem Führungswagen angebracht ist, sondern um einen beweglichen Laserstrahlkopf zum Schrägschneiden in Fünf-Achsen-Laserschneidtechnik für die Schweißkantenvorbereitung. Ein solcher Laserschneidkopf kann im schlimmsten Fall sogar eine horizontale Stellung einnehmen, wobei der austretende Laserstrahl sehr weit reicht.

Um das an der Laserschneidanlage arbeitende Personal gegen diesen aus dem Laserschneidkopf austretenden Laserstrahl zu schützen, kann daran gedacht werden, die gesamte Laserschneidanlage in einem gegen Austritt von Laserstrahlen im wesentlichen dichten Gehäuse unterzubringen. Ein solche Gehäuse wäre aber nicht nur materialaufwendig, sondern würde auch die Zugänglichkeit zu der Laserschneidanlage, insbesondere zum Be- und Entladen mit den zu schneidenden Blechen, erschweren.

Obige Nachteile gelten auch für eine bekannte Laserstrahlbearbeitungsmaschine mit einer Schutzkabine, die einen in mehreren Achsen motorisch verfahrbaren Werkstücktisch umgibt. Dabei ist auf einem Maschinenständer ein Gehäuse horizontal verfahrbar montiert, das einen schwenkbaren Laserkopf mit einem Reflektor für einen Laserstrahl trägt (DE 89 08 806 U). Ein hinter dem Gehäuse erzeugter Laserstrahl wird über den Reflektor durch den Laserkopf zu dem Werkzeugtisch umgelenkt. Auf dem Werkzeugtisch ist die aus einer Stirnwand und zwei Seitenwänden gebildete Schutzkabine montiert, die den Arbeitsbereich und damit das Werkstück sowie den Laserkopf umgibt. Die Schutzkabine kann auch außerhalb des Werkstücktisches stationär angeordnet sein.

Der vorliegenden Erfindung liegt daher die Aufgabe zugrunde, eine Sicherheitsabschirmvorrichtung für eine Laserschneidanlage der eingangs genannten Gattung so auszubilden, daß einerseits keine Gefährdung des an der Laserschneidanlage arbeitenden Personals eintritt, wobei die Sicherheitsabschirmvorrichtung nicht nur bei normalem Dauerbetrieb der Laserschneidanlage, sondern auch bei direktem Beschuß mit dem Laserstrahl für eine bestimmte Mindestzeit betriebssicher sein soll, und wobei andererseits eine gute Zugänglichkeit zu einer Laserschneidanlage erhalten bleiben soll.

Diese Aufgabe wird für die Sicherheitsabschirmvorrichtung mit einer Laserschneideanlage mit den in dem kennzeichneten Teil des Anspruchs 1 angegebenen Merkmalen einer Schutzhaube gelöst.

Mit dieser Anordnung werden die teilweise widersprüchlichen Anforderungen gemäß der Aufgabenstellung erfüllt, und das unter Beibehaltung einer hohen Führungs- und Positioniergenauigkeit und -geschwindigkeit.

Es hat sich gezeigt, daß mit einer solchen Schutzhaube Laserleistungen von 3 KW und darüber sowohl bei direktem Auftreffen des Laserstrahls auf die Schutzhaube während einer vorgeschriebenen Mindestzeit als auch im normalen Betriebsfall, wenn das Werkstück bearbeitet wird, im Dauerbetrieb sicher abgeschirmt werden kann. Dies gilt insbesondere bei einer Ausführung der Sicherheitsabschirmvorrichtung mit mindestens einer Doppelschutzwand bzw. Doppelschutzwandmaterial nach Anspruch 7.

Im einzelnen umfaßt die Schutzhaube vorteilhaft: eine im Abstand vor dem Führungswagen angeordnete vordere Doppelschutzwand die mit dem Maschinenportal in fester Verbindung steht und die unten ein erstes höhenverstellbares Schutzelement aufweist, beidseitig der vorderen Doppelschutzwand je eine sich an diese laserstrahlendicht anschließende seitliche Doppelschutzwand, die sich zumindest bis zu je einer der beiden Seitenwangen erstreckt, und eine hintere Doppelschutzwand, die mit dem Maschinenportal verbunden ist und nach unten mit einem zweiten höhenverstellbaren Schutzelement ergänzt ist. Eine solche Schutzhaube ist aus den einzelnen Doppelschutzwänden leicht herstellbar. Im Hinblick darauf, daß der Querträger des Portals eine Schutzfunktion nach hinten übernimmt und nur unten anschließend durch die hintere Doppelschutzwand zu ergänzen ist, und im weiteren Hinblick darauf, daß die Haube oben offen ist, kann diese Haube massearm ausgeführt werden, so daß sie keine größere Belastung des Maschinenportals darstellt. Dies kommt wiederum der Positionierungs- und Führungsgenauigkeit sowie der Positioniergeschwindigkeit zugute. Bei dieser Ausbildung der Schutzhaube, deren Doppelschutzwände sich bis zur Oberseite des Querträgers des Portals erstrecken, und wegen der höhenverstellbaren Schutzelemente, die sich unten an die vordere und an die hintere Doppelschutzwand anschließen, wird ein sicherer Schutz der sich an der Laserschneidanlage aufhaltenden Personen, insbesondere nach vorne und hinten, erreicht. Dazu tragen die höhenverstellbaren Schutzelemente wesentlich bei, da diese einen unvermeidbaren Spalt zwischen der Unterseite der vorderen bzw. hinteren Doppelschutzwand zu dem zu verarbeitenden Werkstück verengen, denn wegen ihrer Höhenverstellbarkeit können diese Schutzelemente selbsttätig zurückweichen, wenn sich das Werkstück an einer Stelle nach oben wölbt, über die Schutzhaube mit dem Maschinenportal gefahren wird.

Jedes höhenverstellbare Schutzelement ist besonders vorteilhaft als ein annährend umgekehrt U-förmiges, aufgehängtes Profil ausgebildet, welches nach Anspruch 9 um seine Längsachse schwenkbar gelagert ist. Damit wird eine selbsttätige Höhenverstellbarkeit erreicht, wenn das Schutzelement über eine unebene Stelle des Werkstücks fährt und von diesem angestoßen wird, weil in diesem Fall das Schutzelement zurückschwenkt, wobei dessen in Fahrtrichtung vorderer Schenkel beim Zurückschwenken dicht an dem zu bearbeitenden Werkstück liegt.

Entsprechendes gilt auch für den anderen Schenkel des umgekehrt U-förmigen Profils, wenn das Maschinenportal über das Werkstück zurückgefahren wird.

Nach Anspruch 2 sind vorteilhaft die vordere Doppelschutzwand und die beiden seitlichen Doppelschutzwände über einen Rahmen mit den Seitenwangen des Maschinenportals verbunden, wobei die hintere Doppelschutzwand selbständig an dem Querträger angebracht ist. Durch den Rahmen wird eine steife Schutzhaube erreicht, die zu einer laserstrahlendichten Anbringung der vorderen Doppelschutzwand und der seitlichen Doppelschutzwände dient. Hingegen benötigt die hintere Doppelschutzwand keinen solchen Rahmen, sondern kann massearm direkt an dem Querträges des Maschinenportals angebracht sein.

Besonders vorteilhaft ist der Rahmen nach Anspruch 6 kastenförmig mit einer hinteren offenen Seite aus Aluminiumträgern ausgebildet , die oben und unten an den über den Querträgern miteinander verbundenen Seitenwangen des Maschinenportals angebracht sind. Die Aluminiumträger tragen zur massearmen Ausbildung der Schutzhaube und den guten dynamischen Eigenschaften des Maschinenportals der Schutzhaube bei. Der Führungswagen ist durch die Schutzhaube in keiner Weise statisch oder dynamisch belastet.

Nach Anspruch 4 kann vorteilhaft in der vorderen Doppelschutzwand eine Tür vorgesehen sein, die ebenfalls aus Doppelwandmaterial hergestellt ist. Durch die Tür ist der Führungswagen mit dem Laserschneidkopf von außen leicht zugänglich, zumal nach der grundsätzlichen Ausbildung der Schutzhaube die vordere Doppelschutzwand nicht weit von dem Führungswagen bzw. dem Laserschneidkopf absteht.

Wenn die Sicherheitsabschirmvorrichtung nach Anspruch 5 eine nach oben offene, massearme Schutzhaube umfaßt, ist zumindest in den Anwendungsfällen, in denen Personen gegenüber der Laserschneidanlage erhöht tätig sind, oben auf dem Führungswagen ein Laserabschirmblech angebracht, welches zusammen mit dem Führungswagen verfahrbar ist. Durch ein solches, ebenfalls massearm auszubildendes Laserabschirmblech wird erreicht, daß solche Personen nicht mit Laserstrahlreflektionen beaufschlagt werden, die aus dem oben offenen Bereich der Schutzhaube sonst heraustreten könnten.

Besonders vorteilhaft wird bei dem Aufbau der Schutzhaube nach Anspruch 7 von Doppelwänden bzw. Doppelwandmaterial Gebrauch gemacht, die bzw. das aus einer dem Arbeitsbereich der Laserquelle benachbarten metallischen Innenwand und einer zu ihr parallelen metallischen Außenwand, die von dem Arbeitsbereich weiter entfernt ist, bestehen, wobei die zum Arbeitsbereich weisende Seite der Innenwand eine Beschichtung hohen Absorptionsvermögens aufweist und die der Innenwand zugewandte Seite der Außenwand ein demgegenüber geringeres Absorptionsvermögen hat. Mit solchen, aus der DE 196 29 037 C1 bekannten Wandelementen werden bei äußerst einfachem konstruktiven Aufbau dieser Wandelemente die Anforderungen der Laserklasse 1 bezüglich Schutzvorrichtungen erfüllt, die eine Standzeit von 100 sec für das Wandelement fordern, in denen der Laserstrahl das Wandelement nicht durchdringen darf. Bei der Verwendung solcher Wandelemente kann die Laserschneidanlage im achtstündigen normalen Dauerbetrieb betriebssicher arbeiten.

Eine besonders zweckmäßige Dimensionierung der Schutzhaube ist nach Anspruch 8 dadurch gekennzeichnet, daß der Abstand zwischen jeder der Doppelschutzwände zum Laserschneidkopf in allen Verfahrbereichen des Führungswagens mindestens das Dreifache des Fokusabstands des Laserschneidkopfs beträgt. Bei Verwendung des Doppelwandmaterials nach Anspruch 7 braucht dieser Abstand aber auch nicht größer zu sein, so daß die Schutzhaube massearm ausgeführt werden kann und eine gute Zugänglichkeit des Führungswagens erreicht wird.

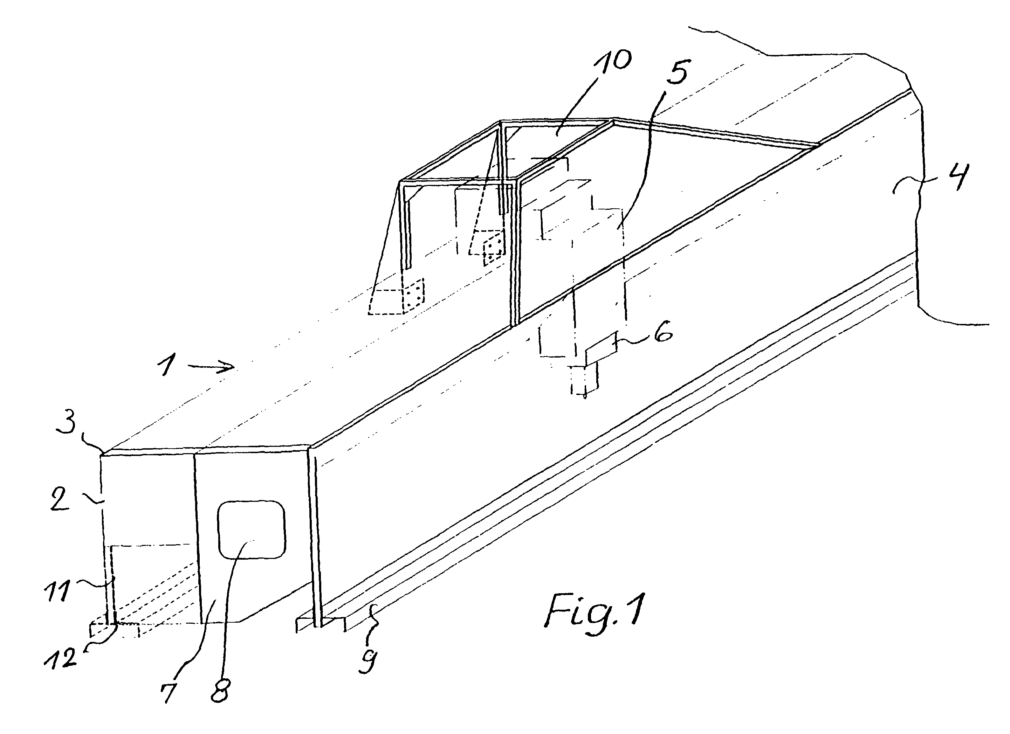

Die Erfindung wird nachfolgend anhand einer Zeichnung mit einer Figur erläutert, wobei weitere wesentliche Merkmale der Erfindung erkennbar sein können. In der Zeichnung zeigt
- Fig. 1: eine schaubildliche Ansicht von oben vorne auf eine Schutzhaube.

In Fig. 1 ist mit 1 generell die Schutzhaube bezeichnet, die an einem bei dem Bezugszeichen 2 angedeuteten Querträger eines Maschinenportals einer Laserschneidanlage angebracht ist. Zwei Seitenwangen des Maschinenportals, zwischen denen der Querträger 2 angeordnet ist, sind aus Fig. 1 nicht erkennbar.

Die Schutzhaube umfaßt einen Rahmen 3 aus Aluminiumträgern, der nach hinten zu dem Querträger 2 hin offen ist und an dem Doppelschutzwände angebracht sind:

Eine vordere, mit 4 bezeichnete Doppelschutzwand ist an dem Rahmen 3 in verhältnismäßig geringem Abstand zu einer Vorderseite eines Führungswagens 5 angebracht, der mit einem Laserschneidkopf 6 ausgerüstet ist, so daß der Führungswagen längs des Querträgers 2, also in Querrichtung, an dem Maschinenportal frei beweglich ist. Seitlich ist der Rahmen 3 mit je einer seitlichen Doppelschutzwand bis zu den nicht dargestellten Seitenwangen des Maschinenportals laserstrahldicht geschlossen, von denen die seitliche Doppelschutzwand 7 in Fig. 1 erkennbar ist. In der seitlichen Doppelschutzwand 7 ist ein Sichtfenster 8 ausgespart, welches aus einem durchsichtigen, aber Laserstrahlen genügend absorbierenden Material besteht.

Nicht dargestellt ist in Fig. 1 eine Tür, die sich in der vorderen Doppelschutzwand 4 befinden kann, um insbesondere den Führungswagen 5 mit dem Laserschneidkopf 6 zu erreichen.

Die vordere Doppelschutzwand 4 ist unten durch ein höhenverstellbares Schutzelement 9 in Form eines umgekehrt U-förmig ausgebildeten und in nicht dargestellter Weise pendelnd aufgehängten Profils ergänzt. Dieses reicht dicht bis in Höhe des Arbeitsbereichs des Laserschneidkopfs 6 bzw. dicht über die Oberseite eines mit dem Laserstrahl zu schneidenden Blechs, welches in Fig. 1 nicht dargestellt ist. In der Mitte des Rahmens 3 kann ein an diesem nach oben zusammenlaufendes Trägerpolygon 10 befestigt sein, welches hinten an dem Träger 2 angebracht ist und damit verhindert, daß der Rahmen 3 mittig durchhängt. Dabei kann der Führungswagen 5, der oben aus dem Rahmen 3 herausragt und somit keine große Bauhöhe des Rahmens erfordert, seitlich durch das zumindest dort offene Trägerpolygon hindurchfahren.

Die beschriebene Schutzhaube 1 ist ergänzt durch eine hintere Doppelschutzwand 11, die nur bis zu dem Querträger 2 laserstrahlendicht heranreicht und mit diesem direkt, also unabhängig von dem Rahmen 3, verbunden sein kann. Die hintere Doppelschutzwand stellt somit ein nur massearmes zusätzliches Abschirmelement dar. Es ist unten durch ein zweites höhenverstellbares Schutzelement 12 ergänzt, welches ebenso wie das erste höhenverstellbare Schutzelement 9 ausgebildet ist. Damit kann die Schutzhaube 1 mit dem ersten höhenverstellbaren Schutzelement 9 sowie die hintere Doppelschutzwand 11 mit dem zweiten höhenverstellbaren Schutzelement 12 dicht über das zu schneidende Blech gefahren werden, ohne daß der Laserstrahl, mit dem das Blech geschnitten wird und der gegebenenfalls reflektiert wird, durch die höhenverstellbaren Schutzelemente 9, 12 hindurch für Personen sichtbar ist, die sich im Bereich der Laserschneidanlage aufhalten.

Es sei an dieser Stelle bemerkt, daß unabhängig von der Schneidfunktion des Laserschneidkopfs 6, der ein gerade bearbeitetes Blech schneidet, auf der Anlage ein zweites Blech be- oder entladen werden kann, ohne daß der Laserschneidkopf abgeschaltet werden muß oder die Personen, welche das zweite Blech ent- oder beladen, gefährdet werden.

## Patentansprüche

1. Sicherheitsabschirmvorrichtung mit einer Laserschneidanlage , die ein auf Schienen in Längsrichtung verfahrbares Maschinenportal mit einem an einem Querträger (2) des Maschinenportals zwischen zwei Seitenwangen in Querrichtung verfahrbaren Führungswagen (5) umfaßt, der einen Laserschneidkopf (6) mit Fokussieroptik aufweist,
**dadurch gekennzeichnet,**
**daß** eine Schutzhaube (1) aus mindestens einer Doppelschutzwand an dem Maschinenportal zusammen mit diesem verfahrbar angebracht ist und so gestaltet ist, daß in ihr der Führungswagen (5) und der Laserschneidkopf (6) in einem Mindestabstand zu einer Innenseite der Schutzhaube (1) verfahrbar sind, wobei die Schutzhaube (1) umfaßt: eine im Abstand vor dem Führungswagen (5) angeordnete vordere Doppelschutzwand (4), die mit dem Maschinenportal in fester Verbindung steht und die unten ein erstes höhenverstellbares Schutzelement (9) aufweist, beidseitig der vorderen Doppelschutzwand (4) je eine sich an diese laserstrahlendicht anschließende seitliche Doppelschutzwand (7), die sich zumindest bis zu je einer der beiden Seitenwangen erstreckt, und eine hintere Doppelschutzwand (11), die mit dem Maschinenportal verbunden ist und nach unten mit einem zweiten höhenverstellbaren Schutzelement (12) ergänzt ist.

2. Sicherheitsabschirmvorrichtung mit einer Laserschneidanlage nach Anspruch 1
**dadurch gekennzeichnet,**
**daß** die vordere Doppelschutzwand (4) und die beiden seitlichen Doppelschutzwände (7) über einen Rahmen (3) mit den Seitenwangen des Maschinenportals verbunden sind und daß die hintere Doppelschutzwand (11) selbständig an dem Querträger (2) angebracht ist.

3. Sicherheitsabschirmvorrichtung mit einer Laserschneidanlage nach Anspruch 1 oder 2,
**dadurch gekennzeichnet,**
**daß** sich die vordere Doppelschutzwand (4) und die seitlichen Doppelschutzwände (7) bis in die Höhe der Oberseite des Querträgers (2) des Maschinenportals nach oben erstrecken, daß die hintere Doppelschutzwand (11) bis an die Unterseite des Querträgers (2) reicht und daß die höhenverstellbaren Schutzelemente (9, 12) bis nahe der Höhe des Arbeits- oder Wirkungsbereichs des Laserschneidkopfs nach unten erstrecken.

4. Sicherheitsabschirmvorrichtung mit einer Laserschneidanlage nach einem der vorangehenden Ansprüche,
**dadurch gekennzeichnet,**
**daß** in der vorderen Doppelschutzwand (4) eine Tür vorgesehen ist, die ebenfalls aus Doppelwandmaterial hergestellt ist.

5. Sicherheitsabschirmvorrichtung mit einer Laserschneidanlage nach einem der vorangehenden Ansprüche,
**dadurch gekennzeichnet,**
**daß** die Schutzhaube (1) oben offen ist und daß oben auf dem Führungswagen (5) ein Laserabschirmblech angebracht ist, welches zusammen mit dem Führungswagen (5) verfahrbar ist.

6. Sicherheitsabschirmvorrichtung mit einer Laserschneidanlage nach Anspruch 2 und/oder einem der Ansprüche 3 bis 5, soweit auf Anspruch 2 bezogen,
**dadurch gekennzeichnet,**
**daß** der Rahmen (3) annährend kastenförmig mit einer hinteren offenen Seite aus Aluminiumträgern ausgebildet ist, die an den über den Querträger (2) des Maschinenportals miteinander verbundenen Seitenwangen angebracht sind.

7. Sicherheitsabschirmvorrichtung mit einer Laserschneidanlage nach einem der vorangehenden Ansprüche,
**dadurch gekennzeichnet,**
**daß** die Doppelschutzwände (4, 11) bzw. das Doppelwandmaterial aus einer dem Arbeitsbereich der Laserquelle benachbarten metallischen Innenwand und einer zu ihr parallelen metallischen Außenwand, die von dem Arbeitsbereich weiter entfernt ist, bestehen, daß die zum Arbeitsbereich weisende Seite der Innenwand eine Beschichtung hohen Absorptionsvermögens aufweist und daß die der Innenwand zugewandte Seite der Außenwand ein demgegenüber geringes Absorptionsvermögen hat.

8. Sicherheitsabschirmvorrichtung mit einer Laserschneidanlage nach Anspruch 7,
**dadurch gekennzeichnet,**
**daß** der Abstand zwischen jeder der Doppelschutzwände (4, 11) zum Laserschneidkopf (6) in allen Verfahrpositionen des Führungswagens (5) mindestens das Dreifache des Fokusabstands des Laserschneidkopfs (6) beträgt.

9. Sicherheitsabschirmvorrichtung mit einer Laserschneidanlage nach Anspruch 2,
**dadurch gekennzeichnet,**
**daß** jedes höhenverstellbare Schutzelement (9, 12) als ein annähernd umgekehrt U-förmiges aufgehängtes Profil ausgebildet ist, welches um seine Längsachse schwenkbar gelagert ist.

## Claims

1. Safety screening device for a laser cutting unit which comprises a machine gantry that can move on rails in the longitudinal direction with a guide carriage (5) that can move in the transverse direction on a cross-member (2) of the machine gantry between two lateral columns, the said carriage comprising a laser cutting head (6) with focusing optics,
**characterised in that**
a protective hood (1) consisting of at least one double protective wall is attached to and can move with the machine gantry, and is designed such that the guide carriage (5) and the laser cutting head (6) can move within it a minimum distance away from an inner side of the protective hood (1), the said protective hood comprising (1): a front double protective wall (4) arranged a distance away from and ahead of the guide carriage (5), which is in fixed connection with the machine gantry and which has at the bottom a first, variable-height protective element (9), on both sides of the front double protective wall (4) in each case one lateral double protective wall (7) connected thereto in a laser-impervious way, which extends at least as far as one of the respective lateral columns, and a rear double protective wall (11) which is connected to the machine gantry and is extended at the bottom by a second variable-height protective element (12).

2. Safety screening device for a laser cutting unit according to Claim 1,
**characterised in that**
the front double protective wall (4) and the two lateral double protective walls (7) are connected via a frame (3) to the lateral columns of the machine gantry, and the rear double protective wall (11) is attached independently to the cross-member (2).

3. Safety screening device for a laser cutting unit according to Claims 1 or 2,
**characterised in that**
the front double protective wall (4) and the lateral double protective walls (7) extend upwards to the level of the top of the cross-member (2) of the machine gantry, the rear double protective wall (11) extends to the underside of the cross-member (2) and the variable-height protective elements (9, 12) extend downwards as far as near the level of the working or active area of the laser cutting head.

4. Safety screening device for a laser cutting unit according to any of the preceding claims,
**characterised in that**
a door is provided in the front double protective wall (4), which is also made from double wall material.

5. Safety screening device for a laser cutting unit according to any of the preceding claims,
**characterised in that**
the protective hood (1) is open at the top, and at the top of and on the guide carriage (5) a laser screening panel is attached, which can move along with the guide carriage (5).

6. Safety screening device for a laser cutting unit according to Claim 2 and/or any of Claims 3 to 5 insofar as they refer to Claim 2,
**characterised in that**
the frame (3) is formed approximately in the shape of a box with an open side at the rear, from aluminium supports which are attached to the lateral columns of the machine gantry connected to one another by the cross-member (2).

7. Safety screening device for a laser cutting unit according to any of the preceding claims,
**characterised in that**
the double protective walls (4, 11) or the double wall material consist of a metallic inner wall adjacent to the working area of the laser source and a metallic outer wall parallel thereto, which is further away from the said working area, the side of the inner wall facing the working area having a high-absorptiveness coating, and the side of the outer wall facing the inner wall having, in contrast, a low absorptiveness.

8. Safety screening device for a laser cutting unit according to Claim 7,
**characterised in that**
the distance between each of the double protective walls (4, 11) and the laser cutting head (6) in all the positions to which the guide carriage (5) can move is at least three times the focal length of the laser cutting head (6).

9. Safety screening device for a laser cutting unit according to Claim 2,
**characterised in that**
each variable-height protective element (9, 12) is formed approximately as an inverted, U-shaped suspended section which is mounted so that it can swivel around its longitudinal axis.

## Revendications

1. Dispositif formant écran de protection comportant une installation de coupe par laser, qui comporte un portique de machine déplaçable sur des rails dans la direction longitudinale et possède un chariot de guidage (5) qui est déplaçable dans une direction transversale, sur un support transversal (2) du portique de machine, entre deux flasques latéraux, et qui comporte une tête de coupe laser (6) comportant un système optique de focalisation,
**caractérisé en ce**
**qu'**un capot de protection (1) constitué par au moins une paroi de protection double est monté sur le portique de machine de manière à être déplaçable conjointement avec ce dernier et est agencé de telle sorte que le chariot de guidage (5) et la tête de coupe laser (6) sont déplaçables dans ce capot à une distance minimale d'un côté intérieur dans le capot de protection (1) à une distance minimale d'un côté intérieur de ce capot, le capot de protection (1) comprenant: une paroi avant de protection double (4), qui est disposée à distance du chariot de guidage (5), est reliée au portique de machine selon une liaison fixe et possède, à sa partie inférieure, un premier élément de protection (9) réglable en hauteur, respectivement une paroi latérale de protection double (7), de chaque côté de la paroi avant de protection double (4) du véhicule respectivement une paroi latérale de protection double (7), qui se raccorde à la paroi avant de protection double d'une manière étanche au faisceau laser et qui s'étend au moins jusqu'à l'un des deux flasques latéraux, et une paroi arrière de protection double (11), qui est relié au portique de machine et est complétée vers le bas, par un second élément de protection (12) réglable en hauteur.

2. Dispositif formant écran de protection comportant une installation de coupe par laser selon la revendication 1, **caractérisé en ce que** la paroi avant de protection double (4) et les deux parois latérales de protection doubles (7) sont reliées au moyen d'un cadre (3) aux flasques latéraux du portique de machine et que la paroi de protection arrière double (11) est montée de façon indépendante sur le support transversal (2).

3. Dispositif formant écran de protection comportant une, installation de coupe à laser selon la revendication 1 ou 2, **caractérisé en ce que** la paroi de protection avant double (4) et les parois de protection latérales doubles (7) s'étendent vers le haut jusqu'à hauteur de la face supérieure du support transversal (2) du portique du machine, que la paroi de protection arrière double (11) s'étend jusque au niveau de la face inférieure du support transversal (2) et que les éléments de protection réglable en hauteur (9, 12) s'étendent vers le bas jusqu'à proximité de la hauteur de la zone de travail ou d'action de la tête de coupe laser.

4. Dispositif formant écran de protection comportant une installation de coupe par laser selon l'une des revendications précédentes, **caractérisé en ce que** dans la paroi avant de protection double (4) est prévue une porte, qui est également réalisée en un matériau de paroi double.

5. Dispositif formant écran de protection comportant une installation de coupe par laser selon l'une des revendications précédentes, **caractérisé en ce que** le capot de protection (1) est ouvert vers le haut et qu'à la partie supérieure du chariot de guidage (5) est disposée une tôle de protection vis-à-vis du laser, qui est déplaçable conjointement avec le chariot de guidage (5).

6. Dispositif formant écran de protection comportant une installation de coupe par laser selon la revendication 2 et/ou l'une des revendications 3 à 5, dans la mesure où elles dépendent de la revendication 2, **caractérisé en ce que** le cadre (3) est agencé approximativement en forme de droite avec un côté arrière ouvert formé par des supports en aluminium, qui sont montés sur les flasques latéraux reliés entre eux par l'intermédiaire du support transversal (2) du portique de machine.

7. Dispositif formant écran de protection comportant une installation de coupe par laser selon l'une des revendications précédentes, **caractérisé en ce que** les parois de protection doubles (4, 11) ou le matériau de paroi double sont constituées par une paroi intérieure métallique, qui est voisine de la zone de travail de la source laser, et par une paroi extérieure métallique parallèle à la paroi intérieure et qui est plus éloignée de la zone de travail, que le côté, tourné vers la zone de travail, de la paroi intérieure comporte un revêtement présentant un pouvoir absorbant élevé et que le côté, qui est tourné vers la paroi intérieure, de la paroi extérieure possède un pouvoir absorbant comparativement faible.

8. Dispositif formant écran de protection comportant une installation de coupe par laser selon la revendication 7, **caractérisé en ce que** la distance entre chacune des parois de protection doubles (4, 11) et la tête de coupe laser (6) dans toutes les positions de déplacement du chariot de guidage (5) est égale au moins au triple de la distance de focalisation de la tête de coupe laser (6).

9. Dispositif formant écran de protection comportant une installation de coupe par laser selon la revendication 2, **caractérisé en ce que** chaque élément de protection (9, 12) réglable en hauteur est agencé sous la forme d'un profilé approximativement en forme de U retourné, qui est monté de manière à pouvoir pivoter autour de son axe longitudinal.
